# EUROPEAN PATENT SPECIFICATION

(11) **EP 2 921 679 B1**
(45) Date of publication and mention of the grant of the patent: **22.01.2025**
(21) Application number: 15155881.4
(22) Date of filing: 20.02.2015
(51) Int. Cl.: F02D 41/22, F02D 19/02, F02D 19/06, F02D 35/02, F02D 41/00, F02B 77/08, F02D 19/10

(54) **DETECTING MISFIRING IN A GASEOUS FUEL OPERATED INTERNAL COMBUSTION ENGINE**
ZÜNDAUSSETZERERKENNUNG IN EINER MIT GAS BETRIEBENEN BRENNKRAFTMASCHINE
DÉTECTION DES RATÉS DE COMBUSTION FONCTIONNANT AVEC UN COMBUSTIBLE GAZEUX DANS UN MOTEUR À COMBUSTION INTERNE

(30) Priority: 21.02.2014 EP 14156259
(43) Date of publication of application: 23.09.2015
(73) Proprietor: Caterpillar Motoren GmbH & Co. KG, 24159 Kiel (DE)
(72) Inventor: Sixel, Eike Joachim, 24109 Kiel (DE); Ritscher, Bert, 24161 Altenholz (DE); Herold, Hendrik, 24159 Kiel (DE); Schmidt, Andre, 18147 Rostock (DE); Haas, Stefan, 24107 Quarnbek / OT Flemhude (DE); Sivasubramanian, Arvind, 61615 Peoria (US)
(74) Representative: Novagraaf Group

(56) References cited:
- EP-A2- 1 559 887
- US-A1- 2003 188 714
- US-A1- 2009 012 673
- US-B2- 7 684 923

## Description

### Technical Field

The present disclosure generally relates to internal combustion engines. More particularly, the present disclosure relates to detecting incomplete combustion during operation of an internal combustion engine operated at least partly on gaseous fuel.

### Background

Internal combustion engines that can be operated at least partly on gaseous fuel include gaseous fuel internal combustion engines and dual fuel (DF) internal combustion engines. DF internal combustion engines are, for example, configured for operation with liquid fuel, such as Diesel, and gaseous fuel, such as natural gas. Incomplete combustion, such as misfires, may occur when a mixture of gaseous fuel and air in a cylinder of such an engine is only partly consumed by the flame. Incomplete combustion may be caused by a malfunction of the ignition system, such that, for example, an insufficient ignition flame is formed. Alternatively, the mixture of fuel and air may be set inappropriately, for example, due to insufficient fuel feed.

Lean mixtures of gaseous fuel and air are specifically susceptible to incomplete combustion as flame formation of those mixtures is small and the fuel may not be fully consumed within one combustion cycle. As an undesired consequence, unburnt fuel may build up in the exhaust passages of the internal combustion engine. This can lead to explosions and potential damage to the engine.

An exemplary DF internal combustion engine is disclosed, for example, in European Patent Application No. 13 174 377.5 by Caterpillar Motoren GmbH & Co. KG, GERMANY, filed on 28 June 2013. An overview of various engine misfire detection methods used in on-board diagnostics of internal combustion engines is given in Journal of Kones. Combustion Engine, Vol 8, No 1-2, 2001, p. 326 - 341.

US 2009/0012673 A1 discloses an energy transfer system of a vehicle. The energy transfer system includes an input energy computation means for determining the input energy, an output energy computation means for determining the energy output, and a comparing means for comparing the input energy with the output energy. An anomaly in the energy transfer system is determined based on the result of the comparison by the comparing means.

The present disclosure is directed, at least in part, to improving or overcoming one or more aspects of prior systems.

### Summary of the Disclosure

According to one aspect of the present disclosure, a method of detecting an incomplete combustion in an internal combustion engine operating at least partly on gaseous fuel comprises the steps of claim 1.

According to another aspect of the present disclosure, an internal combustion engine operating at least partly on gaseous fuel comprises the features of claim 11.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary internal combustion engine operable at least partly on gaseous fuel;
Fig. 2 shows a schematic cross-sectional view of a cylinder of a DF internal combustion engine;
Fig. 3 shows a schematic cross-sectional view of a cylinder of a gaseous fuel internal combustion;
Fig. 4 shows a flow diagram of an exemplary method of detecting an incomplete combustion in a cylinder of an internal combustion engine;
Fig. 5 shows an exemplary time-pressure diagram of the cylinder pressure during various operation conditions of an internal combustion engine; and
Fig. 6 shows a flow diagram of an exemplary method of detecting an incomplete combustion in a cylinder of an internal combustion engine including a control loop.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that an incomplete combustion in a cylinder of an internal combustion engine may be detectable by a combustion energy value of the combustion which may be derived from a temporal development of the cylinder pressure during combustion. The temporal development of the cylinder pressure may be observed and analyzed by an associated control system.

In general, once the incomplete combustion is detected, the associated control system may terminate the operation of the internal combustion engine, indicate a failure of the internal combustion engine to the user of the engine and/or initiate appropriate countermeasures to prevent an incomplete combustion from reoccurring. For example, the control system may increase the fuel-to-air ratio of the mixture admitted to the cylinder. In case the internal combustion engine is a DF internal combustion engine operating in gaseous fuel mode, the control system may be further configured to switch from gaseous fuel mode into liquid fuel mode or to stop switching to gaseous fuel mode.

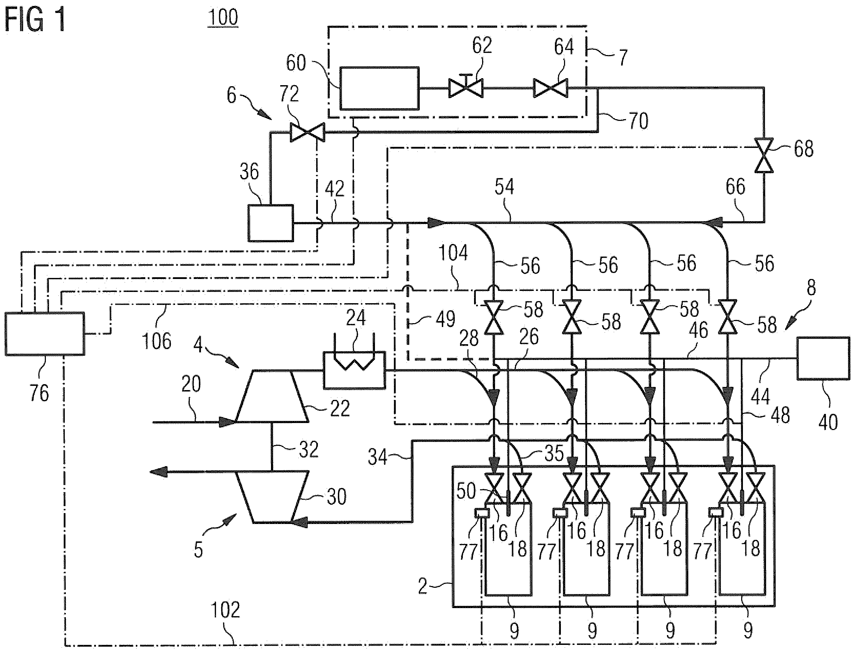

An internal combustion engine operable at least partly on gaseous fuel and exemplary methods for controlling the same are described in the following in connection with Figs. 1 to 3 and Figs. 4 to 6, respectively.

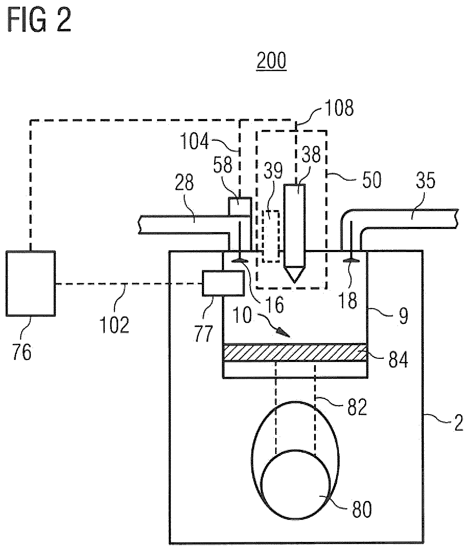

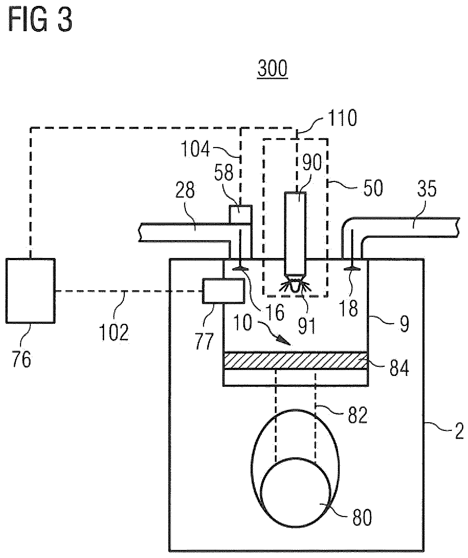

Fig. 1 shows schematically an exemplary internal combustion engine 100 operating at least partly on gaseous fuel, such as a DF engine (illustrated schematically in Fig. 2) or a gaseous fuel engine (illustrated schematically in Fig. 3).

Internal combustion engine 100 comprises an engine block 2, a charge air system 4, an exhaust gas system 5, a gaseous fuel system 6 including a purge gas system 7 and/or a liquid fuel system 8. Internal combustion engine 100 can be powered with a liquid fuel such as, for example, diesel fuel in a liquid fuel mode (LFM), and with a gaseous fuel such as natural gas provided, for example, by an LNG-system, in a gaseous fuel mode (GFM).

Engine block 2 comprises a plurality of cylinders. Exemplarily, four cylinders 9 are depicted in Fig. 1. Engine block 2 may be of any size, with any number of cylinders, such as 6, 8, 12, 16 or 20, and in any configuration, for example, "V", in-line or radial configuration.

Each cylinder 9 is equipped with at least one inlet valve 16 and at least one outlet valve 18. Inlet valves 16 are fluidly connected to charge air system 4 and configured to provide charge air, or a mixture of charge air and gaseous fuel into cylinders 9. Analogous, outlet valves 18 are fluidly connected to exhaust gas system 5 and configured to direct exhaust gas out of respective cylinder 9.

Charge air is provided by charge air system 4 including an air intake 20, a compressor 22 to charge air, and a charge air cooler 24. A charge air manifold 26 is fluidly connected downstream of charge air cooler 24 and guides charge air via cylinder specific inlet channels 28 into respective cylinders 9.

Exhaust gas system 5 includes an exhaust gas turbine 30 connected to compressor 22 via shaft 32 and an exhaust gas manifold 34 guiding exhaust gas from individual exhaust gas outlet channels 35 to exhaust gas turbine 30.

Charge air system 4 may comprise one or more charge air manifolds 26. Similarly, exhaust gas system 5 may comprise one or more exhaust gas manifolds 34.

In addition, inlet valves 16 and outlet valves 18 may be installed within inlet channels 28 and outlet channels 35, respectively. Inlet channels 28 as well as outlet channels 35 may be provided within a common cylinder head or individual cylinder heads covering cylinders 9.

Gaseous fuel system 6 comprises a gaseous fuel source 36 connected to gaseous fuel piping 42. Gaseous fuel source 36 constitutes a gaseous fuel feed for supplying gaseous fuel for combustion in GFM. For example, gaseous fuel source 36 comprises a gas valve unit and a gaseous fuel tank that contains natural gas in a pressurised state.

Gas valve unit is configured to allow, to block, and to control flow from gaseous fuel tank into gaseous fuel piping 42. The gas valve unit may comprise gaseous fuel control valves, gaseous fuel shut-off valves and venting valves.

Gaseous fuel piping 42 is fluidly connected to a gaseous fuel manifold 54 which splits into a plurality of gaseous fuel channels 56. Each gaseous fuel channel 56 is fluidly connected to one of the plurality of inlet channels 28. To dose gaseous fuel into individual inlet channels 28, in each gaseous fuel channel 56, a gaseous fuel admission valve 58 is installed. In some embodiments, internal combustion engine 100 may comprise more than one gaseous fuel manifold 54.

Each gaseous fuel admission valve 58 is configured to allow or to block flow of gaseous fuel into an individual inlet channel 28 to mix with compressed charge air from charge air system 4 in GFM. Thus, cylinder specific mixing zones downstream of each gaseous fuel admission valve 58 are generated. For example, gaseous fuel admission valves 58 may be solenoid actuated plate valves in which springs hold a lower surface of a movable disk against an upper surface of a stationary disk or plate, the two surfaces being configured to provide a sealed relationship in a closed state of gaseous fuel admission valve 58. Each gaseous fuel admission valve 58 may be mounted to a cylinder head covering at least one cylinder 9.

Purge gas system 7 (indicated in Fig. 1 by a dashed dotted box) comprises a purge gas tank 60, a purge gas control valve 62, and a purge gas shut-off valve 64 connected in series. Purge gas tank 60 constitutes a purge gas source to flush gaseous fuel piping 42, gaseous fuel manifold 54, etc. with a purge gas, such as nitrogen in a pressurized state.

Purge gas system 7 may be fluidly connected to gaseous fuel system 6 at various locations. For example, in Fig. 1 a first connection 66 is disposed proximal to the gaseous fuel manifold 54. A second connection 70 is disposed proximal to gaseous fuel source 36. First shut-off valve 68 and second shut-off valve 72 can block or allow a purge gas flow through first connection 66 and second connection 70, respectively. Additional connections may be integrated in gas valve unit of gaseous fuel source 36.

As previously mentioned, Fig. 1 illustrates a DF internal combustion engine as well as a gaseous fuel engine. In a DF internal combustion engine, liquid fuel system 8 comprises a liquid fuel tank 40 connected to liquid fuel piping 44. Liquid fuel tank 40 may comprise a first liquid fuel tank for storing a first liquid fuel, for example, heavy fuel oil (HFO), and a second liquid fuel tank for storing a second liquid fuel, for example, diesel fuel. Liquid fuel tank 40 constitutes a liquid fuel source for supplying liquid fuel for combustion in LFM. Additionally, liquid fuel tank 40 may constitute a liquid fuel source for supplying ignition fuel in GFM.

Liquid fuel piping 44 is fluidly connected to a liquid fuel manifold 46 which splits into a plurality of liquid fuel inlet channels 48. To dose liquid fuel into the combustion chamber of cylinder 9, in each liquid fuel inlet channel 48 a fuel injection system 50 is installed.

In a gaseous fuel internal combustion engine, such as a spark ignited gaseous fuel internal combustion system, fuel injection system 50 is fluidly connected to gaseous fuel source 36 (indicated by a dashed line 49) instead of liquid fuel tank 40. In this embodiment fuel injection system 50 may comprise a pre-combustion chamber for providing spark ignited pilot flames 91 (see Fig. 3) to ignite the mixture of gaseous fuel and air.

Exemplary embodiments of fuel injection system 50 for DF and gaseous fuel internal combustion engines are described in more detail when referring to Figs. 2 and 3, respectively.

As shown in Fig. 1, internal combustion engine 100 further comprises a plurality of pressure sensors 77 mounted at each cylinder 9. Each pressure sensor 77 is configured to generate a signal corresponding to a temporal development of an internal cylinder pressure during the operation of the engine, for example, during combustion. The pressure sensor is further described when referring to Fig. 2.

To control operation of engine 100, a control unit 76 is provided. Control unit 76 forms part of a control system of the engine. Control unit 76 is configured to receive data of pressure sensor 77 via a readout connection line 102. Control unit 76 may further be configured to control various components of engine 100 such as gaseous fuel admission valves 58 via a control connection line 104 and fuel injection system 50 via a control connection line 106. Control unit 76 may further be configured to control valves of purge gas system 7. Alternatively, a second control unit (not shown) may be configured to control the operation of engine 100. Further description of the control system and additional control lines between control unit 76 and other components of the engine, such as the fuel injection system 50, will be given in Figs. 2 and 3.

Control unit 76 may further be connected to other sensors not shown in Fig. 1, such as engine load sensors, engine speed sensors, temperature sensors, NOx-sensors, or fuel-to-air ratio sensors provided for each individual cylinder or for a plurality of cylinders. Control unit 76 may also be connected to an operator panel (not shown) for issuing a warning to the operator, indicating a failure of the engine or the like.

Fig. 2 shows a cylinder 9 of a DF internal combustion engine 200 which is an exemplary embodiment of internal combustion engine 100 of Fig. 1. Elements already described in connection with Fig. 1 have the same reference numerals, such as engine block 2, control unit 76, pressure sensor 77, and cylinder 9.

Cylinder 9 provides at least one combustion chamber 10 for combusting a mixture of gaseous fuel and air, a piston 84, and a crankshaft 80 which is drivingly connected to piston 84 via a piston rod 82. Piston 84 is configured to reciprocate within cylinder 9.

Cylinder 9 is connected to charge air manifold 26 via inlet channel 28 and to exhaust gas manifold 34 via outlet channel 35 (see Fig. 1). Inlet valve 16 is disposed in inlet channel 28, and outlet valve 18 is disposed in outlet channel 35. Gaseous fuel admission valve 58 can supply gaseous fuel to combustion chamber 10 of cylinder 9.

Fig. 2 further illustrates fuel injection system 50 by a dashed box. When DF internal combustion engine 200 is operated in LFM, fuel injection system 50 is used to inject liquid fuel into combustion chamber 10, the liquid fuel being the sole source of energy. When DF internal combustion engine 200 is operated in GFM, fuel injection system 50 may be used to inject a pilot amount of liquid fuel into combustion chamber 10 to ignite the mixture of gaseous fuel and air. In GFM, fuel injection system 50 may therefore function as a gaseous fuel ignition system.

In Fig. 2, an exemplary embodiment of such a gaseous fuel ignition system is based on a main liquid fuel injector 38 for injecting a large amount of liquid fuel in LFM and a pilot amount of liquid fuel into combustion chamber 10 to ignite the mixture of gaseous fuel and air in GFM. In other embodiments, such as for heavy duty DF internal combustion engines, gaseous fuel ignition system may comprise a separate ignition liquid fuel injector 39 to inject the pilot amount of liquid fuel into combustion chamber 10 in GFM.

Cylinder 9 further comprises pressure sensor 77 to measure a temporal development of an internal cylinder pressure during the operation of the engine, for example, during combustion. Pressure sensor 77 may be a capacitive pressure sensor, an electromagnetic pressure sensor, a piezoelectric pressure sensor, an optical pressure sensor or any other pressure sensor known in the art. Pressure sensor 77 may be mounted at any location of cylinder 9 convenient for measuring the cylinder pressure during combustion. For example, pressure sensor 77 may be mounted within a cylinder side wall or at the cylinder head face. Pressure sensor 77 may reach at least partly into the combustion chamber of cylinder 9, for example through a bore in a cylinder side wall.

Pressure sensor 77 may further be disposed outside of the combustion chamber 10 to detect the cylinder pressure indirectly. For example, pressure sensor 77 may be mounted at an existing component of the engine, such as a bolt head, spark plug boss, etc. Pressure sensor 77 may sense stress of that component during combustion, the stress corresponding to the internal cylinder pressure during combustion.

DF internal combustion engine 200 additionally comprises a control system including control unit 76. Control unit 76 is connected to main liquid fuel injector 38 via control connection line 108 and, in case of heavy duty DF internal combustion engines, also to ignition liquid fuel injector 39 via a separate control connection line (not shown).

Fig. 3 shows a cylinder 9 of a gaseous fuel internal combustion engine 300 being another exemplary embodiment of internal combustion engine 100 of Fig. 1. Elements already described in connection with Figs. 1 and 2 have the same reference numerals. Gaseous fuel internal combustion engine 300 is similar to DF internal combustion engine 200 of Fig. 2, except for the components described in the following.

Fuel injection system 50 comprises a pre-combustion chamber 90. Pre-combustion chamber is configured to receive a pre-mixture of gaseous fuel and air outside of combustion chamber 10. The pre-mixture of gaseous fuel and air is ignited, for example by a spark plug, to provide pilot flames 91 disposed into combustion chamber 10. Pilot flames 91 are used to ignite the mixture of gaseous fuel and air in combustion chamber 10. Control unit 76 is connected to pre-combustion chamber 90 via control connection line 110. Alternatively, fuel injection system 50 may be a spark plug for igniting the mixture of gaseous fuel and air via an electric discharge.

In general, control unit 76 of an engine as disclosed in connection with Figs. 1 to 3 may be a single microprocessor or multiple microprocessors that include means for controlling, among others, an operation of various components of DF internal combustion engine 200. Control unit 76 may be a general engine control unit (ECU) capable of controlling numerous functions associated with DF internal combustion engine 200 and/or its associated components. Control unit 76 may include all components required to run an application such as, for example, a memory, a secondary storage device, and a processor such as a central processing unit or any other means known in the art for controlling DF internal combustion engine 200 and its components. Various other known circuits may be associated with control unit 76, including power supply circuitry, signal conditioning circuitry, communication circuitry and other appropriate circuitry. Control unit 76 may analyze and compare received and stored data and, based on instructions and data stored in memory or input by a user, determine whether action is required. For example, control unit 76 may compare received pressure data from pressure sensor 77 with target values stored in memory, and, based on the results of the comparison, transmit signals to one or more components of the engine to alter the operation of the same.

### Industrial Applicability

Exemplary internal combustion engines suited to the disclosed method are, for example, DF internal combustion engines of the series M46DF and M34DF or gaseous fuel internal combustion engines of the series GCM34 manufactured by Caterpillar Motoren GmbH & Co. KG, Kiel, Germany. One skilled in the art would appreciate, however, that the disclosed method can be adapted to suit other internal combustion engines as well.

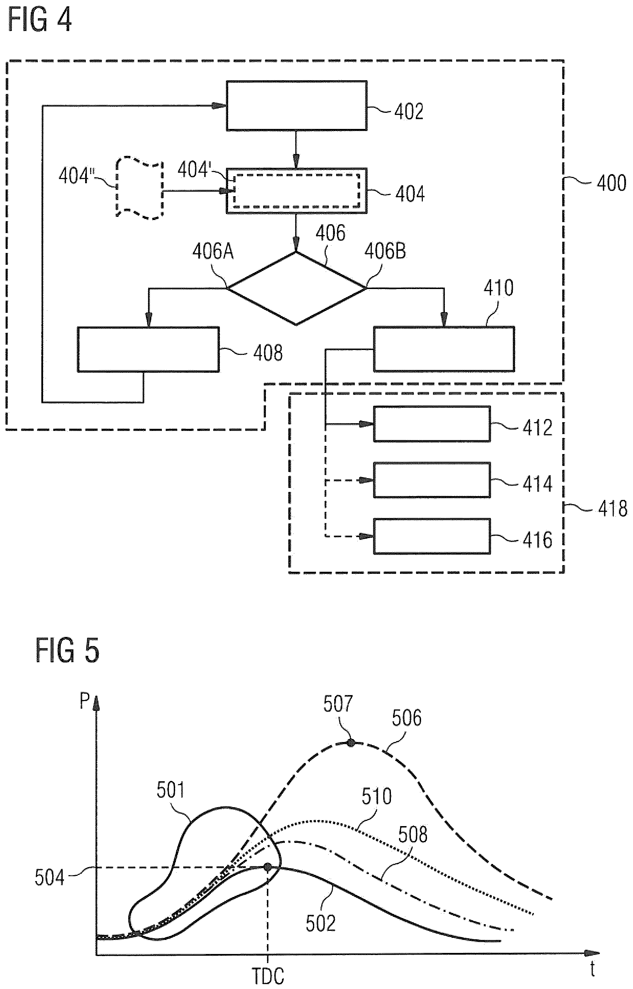

In the following, operation and control of internal combustion engine 100 is described with reference to Figs. 1 to 3 in connection with Figs. 4 to 6. For illustration purposes, the methods are disclosed with reference to structural elements disclosed in connection with Figs. 1 to 3. However, the skilled person will understand that the respective steps can be performed on other embodiments as well.

Referring to Fig. 4, a flow chart of an exemplary method of detecting an incomplete combustion in a cylinder of an internal combustion engine is illustrated.

The method includes an analysis section 400 and a control section 418. In analysis section 400, control unit 76 performs the steps necessary to determine whether the combustion in cylinder 9 is associated with an incomplete combustion (misfire) or with a complete combustion. In case the combustion was associated with incomplete combustion, control unit 76 performs control steps set out in control section 418.

Referring to analysis section 400, at step 402 control unit 76 receives a pressure data from pressure sensor 77 via readout connection line 102. The pressure data corresponds to a temporal development of the cylinder pressure during combustion, for example over time or crank angle.

In Fig. 5 exemplary developments of cylinder pressure for various operating conditions of the engine are shown and will be discussed in the following. In case internal combustion engine is operated in motored operation, i.e. no combustion occurs, the time-pressure data received by control unit 76 is indicated by graph 502. Graph 502 illustrates an increase of pressure up to a certain maximum compression pressure 504, followed by a decay of pressure back to the initial pressure. The increase of pressure up to maximum compression pressure 504 corresponds to the compression of charge air only or unignited fuel-air mixture during the upward movement of piston 84 in cylinder 9. When piston 84 reaches top dead center (TDC), the pressure approaches its maximum value (indicated by 504). Time-pressure graph 502 can be measured or derived from the compression of the gaseous fuel-air mixture within cylinder 9 based on thermodynamic equations, such as equations for adiabatic compression or polytropic compression or can be provided as an estimate or simulation. Control unit 76 has stored a temporal development of cylinder pressure for motored operation of the internal combustion engine, such as graph 502, and uses it as a reference for the later analysis.

In case the engine is operated under normal condition, i.e. the entire or essentially the entire mixture of gaseous fuel and air is consumed by the flame (assumed complete combustion), the time-pressure data received by control unit 76 will be similar to graph 506. Compared to the motored operation illustrated in graph 502, the heat release of the combustion causes the cylinder pressure to increase up to a maximum combustion pressure 507 far above the maximum compression pressure 504. Additionally, peak pressure occurs at times later than TDC due to the finite combustion time. Example values for the maximum compression pressure 504 and maximum combustion pressure 507 are 100 bar and 180 bar, respectively.

In case a misfire occurs in cylinder 9, the fuel-air mixture is only partly consumed by the flame. The pressure increase in cylinder 9 will therefore be somewhat lower than the pressure increase for complete combustion (graph 506), but somewhat higher than the pressure increase for motored operation of the engine (graph 502). An exemplary time-pressure data received for the case of a misfire (incomplete combustion) is given by graph 508 in Fig. 5. Depending on how much gaseous fuel and air was consumed by the flame, time-pressure graph 508 may be more proximal to time-pressure graph 502 associated with complete combustion, or more proximal to time-pressure graph 506 associated with motored combustion.

At step 402 control unit 76 receives a pressure data corresponding to one of the various operating conditions of cylinder 9 explained above. The pressure data may be available for discrete times during the combustion cycle, e.g. for 0.1° crank angle, or quasi-continuously depending on the temporal resolution of pressure sensor 77.

At step 404, control unit 76 derives from that pressure data a combustion energy value of the combustion. The combustion energy value may be derived as a heat release rate of the combustion, for example, by multiplying the received pressure data (graphs 506, 508 or 510) with the corresponding cylinder volume using equations given, for example, by Internal Combustion Engine Fundamentals, John B. Heywood, ISBN 0071004998. A further example of the combustion energy value is the indicated mean effective pressure (IMEP) of the cylinder 9, wherein the IMEP is derived by integrating the received pressure data (graphs 506, 508, 510) over the period of a combustion cycle. Furthermore, the combustion energy value may be derived, for example, from a pressure difference between pressure data associated with combustion (graphs 506, 508, 510) and pressure data associated with motored operation of the engine (graph 502).

Control unit 76 may further associate the combustion energy value with a burnt fuel energy value. In another embodiment, control unit 76 may additionally receive data corresponding to a total energy value of the combustion, for example by receiving data on the total mass flow rates of fuel and air admitted to combustion chamber 10. Based on the total energy value of the combustion and the burned fuel energy value, control unit 76 yields an unburnt energy value.

At step 406, control unit 76 determines whether the derived combustion energy value is beyond a predetermined combustion threshold level. The predetermined combustion threshold level may be stored on the memory of control unit 76 as a fixed value or may be determined based on empirical values typical for the engine. The predetermined combustion threshold level may further depend on the load of the internal combustion engine. In this case, control unit 76 may additionally be connected to engine load sensors configured to receive the load of the engine.

In some embodiments, the predetermined combustion threshold level or more precisely speaking, the predetermined combustion-cycle specific combustion threshold level, may be set by the manufacturer of the engine as an engine-type specific default parameter, and may be obtained from runs of a test engine. The default parameter may be defined during the definition of all engine-type specific operating parameters for the engine control system The test engine may be the same type or a different type than internal combustion engine 100, and may be deliberately brought into a state where one or more cylinders of the test engine start to misfire. For example, during the runs of the test engine, a fuel-to-air ratio of the gaseous fuel supplied to cylinder 9 may be decreased until one of the cylinders starts to misfire, or the gaseous fuel ignition system and/or the gasous fuel admission valve 58 may be forced to stay closed. During those tests, the cylinder pressure of each or all cylinders, such as the maximum combustion pressure in cylinder 9, the heat release rate or the indicated mean effective pressure - generally all data which is used to derive a combustion energy value - may be recorded. From the recorded cylinder pressure a critical cylinder pressure may be determined at which one or all cylinders of internal combustion engine 100 start to misfire.

For example, the predetermined combustion-cycle specific combustion threshold level may be set according to a predetermined combustion energy value associated with a misfire of any of the cylinders of internal combustion engine 100. For example, the predetermined combustion energy value may be a heat release rate value, a maximum combustion pressure in cylinder 9, or an indicated mean effective pressure at which misfire was detected. In some embodiments, a heat release rate value, a maximum combustion pressure in cylinder 9, or an indicated mean effective pressure at which misfire is detected may be about 5% to 25% of the heat release rate, the maximum combustion pressure in cylinder 9, or the indicated mean effective pressure during desired operation of internal combustion engine 100, e.g. during operation with complete combustion. Thus, the predetermined combustion-cycle specific combustion threshold level may be set to a value at which - strictly speaking - combustion occurs; although the combustion occurs not as desired.

Moreover, because the cylinder pressure - or more generally the combustion energy value derived from the cylinder pressure - also depends on other engine parameters, such as on a load or a speed of internal combustion engine 100, in some embodiments, the test runs may also be performed for various loads and speeds of internal combustion engine 100. Then, for each load and each speed a critical cylinder pressure may be determined at which one or all cylinders of internal combustion engine 100 start to misfire. And those critical cylinder pressure values distinguishing between complete and incomplete combustion may then be stored as a function of engine speed and/or load on the memory of control unit 76 as part of an engine specific data bank. Thus, a predetermined combustion-cycle specific combustion threshold level map may be readily available for further steps of the control procedure.

Therefore, in some embodiments, step 406 (at which control unit 76 determines whether the derived combustion energy value is beyond the predetermined combustion-cycle specific combustion threshold level) may include a further step 404' indicated as a dashed box, at which control unit 76 provides the predetermined combustion-cycle specific combustion threshold level and/or the associated maps from its memory. In some embodiments, those values and/or maps may be provided by reading (step 404") the engine specific data bank in which the predetermined combustion-cycle specific combustion threshold level and/or the associated maps are stored.

Once the predetermined combustion-cycle specific combustion threshold level and/or the associated maps are read at step 404'', during a further step (not shown) the predetermined combustion-cycle specific combustion threshold level and/or the associated maps may then be compared with the derived combustion energy value.

In the following the predetermined combustion-specific combustion threshold level may also be referred to as predetermined combustion threshold level.

Generally, the threshold companion may differ for burnt and unburnt energy values. For example, when control unit 76 associated the combustion energy value with a burnt fuel energy value, control unit 76 determines whether the burnt fuel energy value is below the predetermined combustion threshold level. In contrast, when control unit 76 yielded an unburnt fuel energy value, control unit 76 determines whether the unburnt fuel energy value is above the predetermined combustion threshold level.

Assuming acceptable combustion, control unit 76 determines at step 406A that the combustion energy value is not beyond the predetermined combustion threshold level, e.g. the burnt (unburnt) fuel energy value is above (below) the predetermined threshold level, and associates the combustion with a complete combustion (step 408) in which case no further control steps are performed by control unit 76 and the analysis can be performed for further combustion processes.

In case control unit 76 determined that the combustion energy value is beyond the predetermined combustion threshold level (step 406B), e.g. the burnt (unburnt) fuel energy value is below (above) the predetermined threshold level, the control unit associates the combustion with an incomplete combustion (step 410) and performs further control steps set out in control section 418.

In some embodiments, control unit 76 may perform the steps of analysis section 400 for a series of combustion events and perform further control steps set out in control section 418 only when a pre-set portion of the series of combustion events was associated with incomplete combustion. The pre-set portion may be a fixed value stored on the memory of control unit 76 or depend on the load of the engine, such that, for example, at low engine loads a larger number of incomplete combustion events is tolerated by control unit 76 until control steps of control section 418 are performed.

In the following, control steps of control section 418 are explained that can be performed individually or in desired combinations. In general, once control unit 76 determined that the combustion event, or a pre-set portion of the series of combustion events are associated with incomplete combustion, at step 412 control unit 76 sends control tasks to the fuel system. For example, gaseous fuel admission valve 58 may be controlled via control connection line 104 to stop the flow of gaseous fuel into combustion chamber 10. When internal combustion engine is a DF internal combustion engine (compare Fig. 2), control unit 76 may send a control task to main liquid fuel injector 38 via control connection line 108 to stop the flow of liquid fuel into combustion chamber 10, thus terminating the operation of LFM or GFM of the internal combustion engine. When internal combustion engine is a gaseous fuel internal combustion engine (see Fig. 3), at step 412 control unit 76 may control gaseous fuel admission valve 58 to stop the flow of gaseous fuel and/or control pre-combustion chamber 90 via control connection line 110 to stop formation of spark ignited pilot flames 91.

In Fig. 4, alternative control steps performed by control unit during control section 418 are indicated by the dashed lines. As one example, at step 414 control unit 76 may send control tasks to the operator panel of the internal combustion engine indicating misfiring of the internal combustion engine, e.g. by a blinking warning light or by emitting a warning tone. As another example, if internal combustion engine is a DF internal combustion engine, at step 416 control unit 76 may switch from GFM to LFM by sending a control task to gaseous fuel admission valve 58 to stop admission of gaseous fuel to combustion chamber 10 and in turn send a control task to main liquid fuel injector 38 to increase flow of liquid fuel into combustion chamber 10, thus initiating the switch.

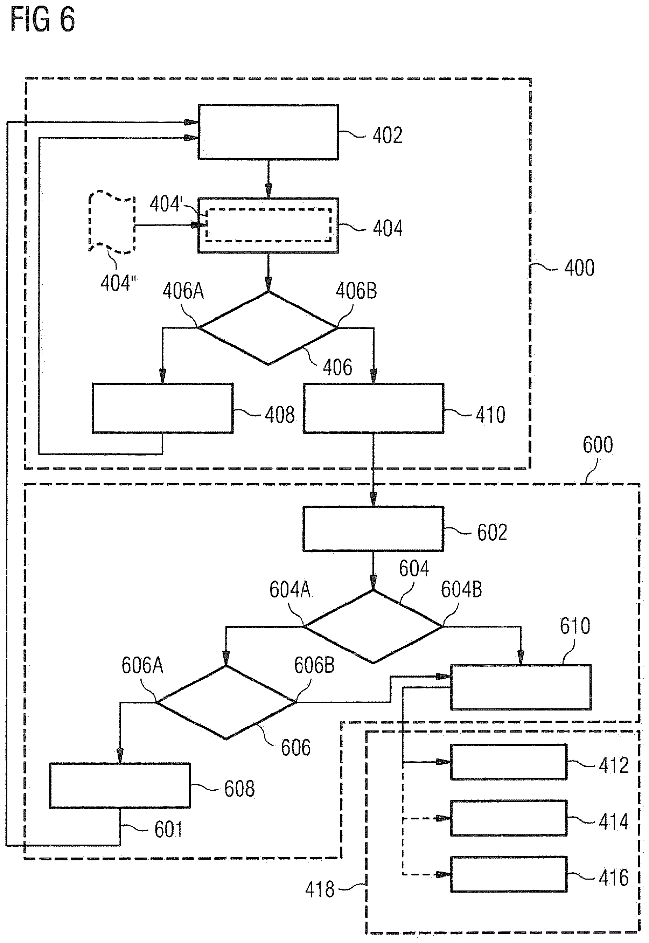

Referring to Fig. 6, a flow diagram of an exemplary method of detecting an incomplete combustion in a cylinder is shown including a further countermeasure section 600 with a control loop 601. Steps already described in connection with Fig. 4 have the same reference numerals. The exemplary method of Fig. 6 may comprise the same analysis section 400 as described in Fig. 4. Additional countermeasure section 600 may avoid incomplete combustion from reoccurring in the following combustion cycles prior the need to perform control steps of control section 418. The additional steps in countermeasure section 600 are described as follows.

When at step 410 control unit 76 associated the combustion with an incomplete combustion, at step 602 it further derives from a section of the pressure data (section 501 in Fig. 5) associated with an ignition of the fuel-air mixture an ignition energy value. Section 501 is typically at, but may not be limited to, times between 0° and 20° crank angle and particularly at times between 5° and 15° crank angle before TDC of piston 84. The ignition energy value may be derived from a pressure difference between the time-pressure data received from pressure sensor 77 and the predetermined time-pressure data associated with motored operation of the engine within section 501.

The ignition energy value is indicative of the operability of the gaseous fuel ignition system, such as ignition liquid fuel injector 39 and main liquid fuel injector 38 in DF internal combustion engines or pre-combustion chamber 90 in gaseous fuel internal combustion engines.

At step 604, control unit 76 determines whether the ignition energy value derived from section 501 indicates operability or in-operability of the gaseous fuel ignition system by determining whether the ignition energy value is beyond a predetermined ignition threshold level. Predetermined ignition threshold value can be stored on the memory of control unit 76 as a fixed value and/or in dependence of the load of the engine.

In case the ignition energy value is beyond a predetermined ignition threshold level, control unit 76 determines that the ignition energy value indicates the operability of the gaseous fuel ignition system (step 604A).

In case control unit 76 determined at step 604A that the ignition energy value indicates operability of the gaseous fuel ignition system, control unit 76 further determines at step 606 whether the fuel-to-air ratio of the mixture admitted to cylinder 9 is below an upper fuel-to-air ratio threshold level. For this purpose, control unit 76 may be additionally connected to fuel-to-air ratio sensors. The upper fuel-to-air ratio threshold level is stored on the memory of control unit 76 but may be, similarly to the ignition threshold level and combustion threshold level, depending on the load of the engine. In addition or alternatively, control unit 76 may have stored a predetermined time-pressure data, such as graph 510 in Fig. 4, which corresponds to the upper fuel-to-air threshold level.

In case the fuel-to-air ratio is below the upper fuel-to-air ratio threshold level (step 606A), control unit 76 sends control tasks to gaseous fuel admission valve 58 to increase the flow of gaseous fuel for the respective cylinder 9, a subgroup of cylinders or all cylinders of internal combustion engine (step 608). Control unit may then assess the new time-pressure data corresponding to the next combustion cycle and perform steps 602 and 604. In case control unit 76 determines that the gaseous fuel ignition system is still operable, also step 606 is performed, until at step 606B control unit 76 determines that the fuel-to-air ratio can no longer be increased and leaves control loop 601.

If control loop is left at step 606B, control unit 76 then confirms that the combustion is associable with an incomplete combustion (step 610) as previously done in step 410, at which point at least one of the control steps set out in control section 418 (Fig. 4) are performed.

Similarly, in case control unit 76 already determined at step 604B (in any of the runs through control loop 601, or even before control loop 601 was entered) that the ignition energy value indicates in-operability of the gaseous fuel ignition system, control loop 601 is left at step 604B and control unit 76 confirms that the combustion is associable with an incomplete combustion (step 610), thus initiating at least one of the control steps of control section 418.

In some embodiments where the combustion energy value and/or ignition energy value are derived for a series of combustion events, the combustion energy value and/or ignition energy value may be derived, for example, for successive combustion events or for every other, third, fourth or any other fraction of combustion events.

In some embodiments the predetermined combustion threshold level may be determined based on a certain number, such as a fixed value, a delta value below averaged time-pressure data, or it may be determined based on a predetermined combustion pressure over intake manifold pressure.

Analysis section 400 and control section 418 are, for example, relevant with respect to the safe operation of marine DF and gaseous fuel internal combustion engines. For those engines, Marine Class Society demands that in the exhaust passage of the engine the lower explosive limit (LEL) should not be exceeded to ensure safe operation of the engine. Analysis section 400 and control section 418 may ensure or at least help that engines such as DF internal combustion engines of the series M46DF and M34DF or gaseous fuel internal combustion engine of the series GCM34 comply with this regulation by initiating appropriate control steps such as a termination of the operation of the engine or, in case the engine is a DF internal combustion engine, a switch from GFM to LFM, once misfiring of the engine was detected.

Countermeasure section 600 may similarly be helpful in that respect, as the steps performed within this section allow to react to misfires without initiating a switch over to LFM or a termination of the operation of the engine. Using the herein disclosed aspects, one may therefore be able to reduce down time of the engine, increase maintenance intervals, and/or enlarge the operating envelope of the engine.

Although the preferred embodiments of this invention have been described herein, improvements and modifications may be incorporated without departing from the scope of the following claims.

## Claims

1. A method of detecting an incomplete combustion in an internal combustion engine (100, 200, 300) operating at least partly on gaseous fuel, the method comprising:
receiving (step 402) a pressure data (506, 508, 510) corresponding to a temporal development of a cylinder pressure during combustion within a single combustion cycle;
deriving (step 404) from the pressure data (506, 508, 510) for that specific combustion cycle a combustion energy value of the combustion,
associating the derived combustion energy value with a burnt fuel energy value, and, optionally, receiving data corresponding to a total energy value of the combustion and yielding an unburnt fuel energy value from the total energy value of the combustion and the burnt fuel energy value;
determining (step 406B) that the burnt fuel energy value is below a predetermined combustion-cycle specific combustion threshold level, or that the unburnt fuel energy value is above the predetermined combustion-cycle specific combustion threshold level, the predetermined combustion-cycle specific combustion threshold level being based on a critical cylinder pressure determined during operation of a test engine, at which critical cylinder pressure one or all cylinders of the internal combustion engine (100, 200, 300) start to misfire; and
associating (step 410) the combustion event with an incomplete combustion at that specific combustion cycle if the combustion energy level is beyond the predetermined combustion threshold level.

2. The method of claim 1, wherein determining (step 406B) that the burnt or unburnt fuel energy value is below or above the predetermined combustion-cycle specific combustion threshold level further comprises:
providing (step 404') the predetermined combustion-cycle specific combustion threshold level as an engine-type specific default parameter; and
comparing the predetermined combustion-cycle specific combustion threshold level with the burnt or unburnt fuel energy value.

3. The method of claim 2, wherein providing (step 404') the predetermined combustion-cycle specific combustion threshold level further comprises:
reading (step 404") the predetermined combustion-cycle specific combustion threshold level from an engine specific data bank stored on a control unit of the internal combustion engine (100, 200, 300), wherein
the predetermined combustion-cycle specific combustion threshold level is in particular provided as a map including threshold values given as a function of a load or a speed of the internal combustion engine (100, 200, 300).

4. The method of any one of the preceding claims, wherein the predetermined combustion-cycle specific combustion threshold level distinguishes between complete and incomplete combustion in a cylinder (9) of the internal combustion engine (100, 200, 300), and/or
is one of a heat release rate, a maximum combustion pressure in the cylinder (9), or an indicated mean effective pressure at which misfire is detected, and/or
is about 5% to 25% of the heat release rate, the maximum combustion pressure in the cylinder (9), or the indicated mean effective pressure during operation of the internal combustion engine (100) with complete combustion in the cylinder (9).

5. The method of any one of the preceding claims, wherein the incomplete combustion indicates that an increased amount of unburnt gaseous fuel is in the exhaust associated with the combustion, and the method further comprises
terminating (step 412) the operation of the internal combustion engine (100, 200, 300) operating on the gaseous fuel;
indicating (step 414) a failure of the internal combustion engine (100, 200, 300); and/or
switching (step 416) the operation to liquid fuel operation.

6. The method according to any one of claims 1 to 4, wherein, when, for multiple combustion events, a pre-set portion of the combustion events is associated with incomplete combustions, the method further comprises
terminating (step 412) the operation of the internal combustion engine (100, 200, 300) operating on the gaseous fuel;
indicating (step 414) a failure of the internal combustion engine (100, 200, 300); and/or
switching (step 416) the operation to liquid fuel operation.

7. The method of any one of the preceding claims, wherein the internal combustion engine (100, 200, 300) comprises a gaseous fuel ignition system, and the method further comprises
deriving (step 602) from a section (501) of the pressure data (506, 508, 510) associated with an ignition an ignition energy value indicative of the operability of the gaseous fuel ignition system.

8. The method of claim 7, further comprising:
determining (step 604A) that the ignition energy value indicates operability of the gaseous fuel ignition system; and
increasing (step 608) the fuel-to-air ratio, and, for example, for an internal combustion engine (100, 200, 300) with a plurality of cylinders (9), increasing the fuel-to-air ratio for the respective cylinder (9), and/or
determining (step 604B) that the ignition energy value indicates in-operability of the gaseous fuel ignition system; and at least one of
terminating (step 412) the operation of the internal combustion engine (100, 200, 300) on the gaseous fuel;
indicating (step 414) a failure of the internal combustion engine (100, 200, 300); and
switching (step 416) the operation to liquid fuel operation.

9. The method of claim 8, wherein determining (step 604) that the ignition energy value indicates operability or in-operability comprises:
determining that the ignition energy value is beyond a predetermined ignition threshold level.

10. The method of any one of the preceding claims, wherein the combustion energy value is a heat release rate of the combustion, the heat release rate of the combustion being derived, for example, by multiplying the received pressure data with the corresponding cylinder volume, and/or
wherein the combustion energy value is an indicated mean effective pressure (IMEP) of the cylinder (9), the indicated mean effective pressure being derived, for example, by integrating the received pressure data over the period of a combustion cycle, and/or
wherein the combustion energy value is derived from a pressure difference between pressure data associated with combustion (506, 508, 510) and pressure data associated with motored operation of the engine (502), wherein the latter is derived, for example, from the compression of charge air or unignited fuel-air mixture.

11. An internal combustion engine (100, 200, 300) operating at least partly on gaseous fuel, comprising:
a gaseous fuel ignition system to ignite the mixture of gaseous fuel and air,
a sensor (77) configured to detect a pressure data corresponding to a temporal development of a cylinder pressure during combustion, and
a control unit (76) configured to perform the method according to any one of the preceding claims, wherein the sensor (77) reaches at least partly into the combustion chamber (10) of the cylinder (9) of the internal combustion engine (100, 200, 300).

## Patentansprüche

1. Verfahren zum Erkennen einer unvollständigen Verbrennung in einem Verbrennungsmotor (100, 200, 300), der mindestens teilweise mit gasförmigem Brennstoff betrieben wird, das Verfahren umfassend:
Empfangen (Schritt 402) von Druckdaten (506, 508, 510), die einer zeitlichen Entwicklung eines Zylinderdrucks während der Verbrennung innerhalb eines einzelnen Verbrennungszyklus entsprechen;
Ableiten (Schritt 404) eines Verbrennungsenergiewerts der Verbrennung von den Druckdaten (506, 508, 510) für diesen spezifischen Verbrennungszyklus,
Verknüpfen des abgeleiteten Verbrennungsenergiewerts mit einem Energiewert für verbrannten Brennstoff und, optional, Empfangen von Daten, die einem Gesamtenergiewert der Verbrennung entsprechen, und Erzeugen eines Energiewerts für unverbrannten Brennstoff von dem Gesamtenergiewert der Verbrennung und dem Energiewert für verbrannten Brennstoff;
Bestimmen (Schritt 406B), dass der Energiewert für verbrannten Brennstoff unterhalb eines zuvor bestimmten verbrennungszyklusspezifischen Verbrennungsschwellenpegels liegt oder dass der Energiewert für unverbrannten Brennstoff oberhalb des zuvor bestimmten verbrennungszyklusspezifischen Verbrennungsschwellenpegels liegt, wobei der zuvor bestimmte verbrennungszyklusspezifische Verbrennungsschwellenpegel auf einem kritischen Zylinderdruck basiert, der während eines Betriebs eines Testmotors bestimmt wird, wobei bei dem kritischen Zylinderdruck einer oder alle Zylinder des Verbrennungsmotors (100, 200, 300) anfangen, fehlzuzünden; und
Verknüpfen (Schritt 410) des Verbrennungsereignisses mit einer unvollständigen Verbrennung in diesem spezifischen Verbrennungszyklus, falls der Verbrennungsenergiepegel über dem zuvor bestimmten Verbrennungsschwellenpegel liegt.

2. Verfahren nach Anspruch 1, wobei das Bestimmen (Schritt 406B), dass der Energiewert für verbrannten oder unverbrannten Brennstoff unterhalb oder oberhalb des zuvor bestimmten verbrennungszyklusspezifischen Verbrennungsschwellenpegels liegt, ferner umfasst:
Bereitstellen (Schritt 404') des zuvor bestimmten verbrennungszyklusspezifischen Verbrennungsschwellenpegels als einen motortypspezifischen Standardparameter; und
Vergleichen des zuvor bestimmten verbrennungszyklusspezifischen Verbrennungsschwellenpegels mit dem Energiewert für verbrannten oder unverbrannten Brennstoff.

3. Verfahren nach Anspruch 2, wobei das Bereitstellen (Schritt 404') des zuvor bestimmten verbrennungszyklusspezifischen Verbrennungsschwellenpegels ferner umfasst:
Lesen (Schritt 404") des zuvor bestimmten verbrennungszyklusspezifischen Verbrennungsschwellenpegels aus einer motorspezifischen Datenbank, die in einer Steuereinheit des Verbrennungsmotors (100, 200, 300) gespeichert ist, wobei
der zuvor bestimmte verbrennungszyklusspezifische Verbrennungsschwellenpegel insbesondere als ein Kennfeld bereitgestellt wird, einschließlich Schwellenwerten, die in Abhängigkeit einer Last oder einer Drehzahl des Verbrennungsmotors (100, 200, 300) vorgegeben sind.

4. Verfahren nach einem der vorstehenden Ansprüche, wobei der zuvor bestimmte verbrennungszyklusspezifische Verbrennungsschwellenpegel zwischen vollständiger und unvollständiger Verbrennung in einem Zylinder (9) des Verbrennungsmotors (100, 200, 300) unterscheidet und/oder
eines von einer Wärmefreisetzungsrate, einem maximalen Verbrennungsdruck in dem Zylinder (9) oder einem angegebenen mittleren effektiven Druck ist, bei dem eine Fehlzündung erkannt wird, und/oder
etwa 5 % bis 25 % der Wärmefreisetzungsrate, des maximalen Verbrennungsdrucks in dem Zylinder (9) oder des angegebenen mittleren effektiven Drucks während des Betriebs des Verbrennungsmotors (100) mit vollständiger Verbrennung in dem Zylinder (9) beträgt.

5. Verfahren nach einem der vorstehenden Ansprüche, wobei die unvollständige Verbrennung angibt, dass sich eine erhöhte Menge an unverbranntem gasförmigem Brennstoff in dem Abgas befindet, das mit der Verbrennung verknüpft ist, und das Verfahren ferner umfasst
Beenden (Schritt 412) des Betriebs des Verbrennungsmotors (100, 200, 300), der mit dem gasförmigen Brennstoff betrieben wird;
Angeben (Schritt 414) eines Ausfalls des Verbrennungsmotors (100, 200, 300); und/oder
Umschalten (Schritt 416) des Betriebs auf einen Flüssigbrennstoffbetrieb.

6. Verfahren nach einem der Ansprüche 1 bis 4, wobei, wenn für mehrere Verbrennungsereignisse ein voreingestellter Anteil der Verbrennungsereignisse mit unvollständigen Verbrennungen verknüpft ist, das Verfahren ferner umfasst
Beenden (Schritt 412) des Betriebs des Verbrennungsmotors (100, 200, 300), der mit dem gasförmigen Brennstoff betrieben wird;
Angeben (Schritt 414) eines Ausfalls des Verbrennungsmotors (100, 200, 300); und/oder
Umschalten (Schritt 416) des Betriebs auf den Flüssigbrennstoffbetrieb.

7. Verfahren nach einem der vorstehenden Ansprüche, wobei der Verbrennungsmotor (100, 200, 300) ein Zündsystem für gasförmigen Brennstoff umfasst und das Verfahren ferner umfasst
Ableiten (Schritt 602) eines Zündenergiewerts, der die Betriebsfähigkeit des Zündsystems für gasförmigen Brennstoff angibt, von einem Abschnitt (501) der Druckdaten (506, 508, 510), die mit einer Zündung verknüpft sind.

8. Verfahren nach Anspruch 7, ferner umfassend:
Bestimmen (Schritt 604A), dass der Zündenergiewert die Betriebsfähigkeit des Zündsystems für gasförmigen Brennstoff angibt; und
Erhöhen (Schritt 608) des Brennstoff-Luft-Verhältnisses, und, beispielsweise für einen Verbrennungsmotor (100, 200, 300) mit einer Vielzahl von Zylindern (9), Erhöhen des Brennstoff-Luft-Verhältnisses für den jeweiligen Zylinder (9), und/oder
Bestimmen (Schritt 604B), dass der Zündenergiewert eine Betriebsunfähigkeit des Zündsystems für gasförmigen Brennstoff angibt; und mindestens eines von
Beenden (Schritt 412) des Betriebs des Verbrennungsmotors (100, 200, 300) mit dem gasförmigen Brennstoff;
Angeben (Schritt 414) eines Ausfalls des Verbrennungsmotors (100, 200, 300); und
Umschalten (Schritt 416) des Betriebs auf den Flüssigbrennstoffbetrieb.

9. Verfahren nach Anspruch 8, wobei das Bestimmen (Schritt 604), dass der Zündenergiewert die Betriebsfähigkeit oder Betriebsunfähigkeit angibt, umfasst:
Bestimmen, dass der Zündenergiewert über einem zuvor bestimmten Zündschwellenpegel liegt.

10. Verfahren nach einem der vorstehenden Ansprüche, wobei der Verbrennungsenergiewert eine Wärmefreisetzungsrate der Verbrennung ist, wobei die Wärmefreisetzungsrate der Verbrennung, beispielsweise, durch Multiplizieren der empfangenen Druckdaten mit dem entsprechenden Zylindervolumen abgeleitet wird, und/oder
wobei der Verbrennungsenergiewert ein angegebener mittlerer effektiver Druck (IMEP) des Zylinders (9) ist, wobei der angegebene mittlere effektive Druck, beispielsweise, durch Integrieren der empfangenen Druckdaten über die Dauer eines Verbrennungszyklus abgeleitet wird, und/oder
wobei der Verbrennungsenergiewert von einer Druckdifferenz zwischen Druckdaten, die mit der Verbrennung (506, 508, 510) verknüpft sind, und Druckdaten, die mit dem motorisierten Betrieb des Motors (502) verknüpft sind, abgeleitet wird, wobei letztere, beispielsweise, von der Kompression von Ladeluft oder einem nicht gezündeten Brennstoff-Luft-Gemisch abgeleitet werden.

11. Verbrennungsmotor (100, 200, 300), der mindestens teilweise mit gasförmigem Brennstoff betrieben wird, umfassend:
das Zündsystem für gasförmigen Brennstoff, um das Gemisch aus gasförmigem Brennstoff und Luft zu zünden,
einen Sensor (77), der konfiguriert ist, um Druckdaten zu erkennen, die einer zeitlichen Entwicklung eines Zylinderdrucks während der Verbrennung entsprechen, und
eine Steuereinheit (76), die konfiguriert ist, um das Verfahren nach einem der vorstehenden Ansprüche durchzuführen, wobei der Sensor (77) mindestens teilweise in den Verbrennungsraum (10) des Zylinders (9) des Verbrennungsmotor (100, 200, 300) hineinreicht.

## Revendications

1. Procédé de détection d'une combustion incomplète dans un moteur à combustion interne (100, 200, 300) fonctionnant au moins en partie avec un carburant gazeux, le procédé consistant à :
recevoir (étape 402) des données de pression (506, 508, 510) correspondant à une évolution temporelle de la pression d'un cylindre pendant la combustion au cours d'un unique cycle de combustion ;
obtenir (étape 404) à partir des données de pression (506, 508, 510) pour ce cycle de combustion spécifique un pouvoir calorifique de combustion de la combustion,
associer le pouvoir calorifique de combustion obtenu à un pouvoir calorifique du carburant brûlé, et, éventuellement, recevoir des données correspondant à un pouvoir calorifique total de la combustion et produire un pouvoir calorifique du carburant imbrûlé à partir du pouvoir calorifique total de la combustion et du pouvoir calorifique du carburant brûlé ;
déterminer (étape 406B) que le pouvoir calorifique du carburant brûlé est inférieur à un niveau prédéterminé de seuil de combustion spécifique au cycle de combustion, ou que le pouvoir calorifique du carburant imbrûlé est supérieur au niveau prédéterminé de seuil de combustion spécifique au cycle de combustion, le niveau prédéterminé de seuil de combustion spécifique au cycle de combustion étant basé sur une pression de cylindre critique déterminée pendant le fonctionnement d'un moteur d'essai, pression de cylindre critique à laquelle un ou tous les cylindres du moteur à combustion interne (100, 200, 300) commencent à avoir des ratés d'allumage ; et
associer (étape 410) l'événement de combustion à une combustion incomplète pour ce cycle de combustion spécifique si le niveau d'énergie de combustion est supérieur au niveau prédéterminé de seuil de combustion.

2. Procédé selon la revendication 1, dans lequel l'étape consistant à déterminer (étape 406B) que le pouvoir calorifique du carburant brûlé ou imbrûlé est inférieur ou supérieur au niveau prédéterminé de seuil de combustion spécifique au cycle de combustion consiste en outre à :
fournir (étape 404') le niveau prédéterminé de seuil de combustion spécifique au cycle de combustion en tant que paramètre par défaut spécifique au type de moteur ; et
comparer le niveau prédéterminé de seuil de combustion spécifique au cycle de combustion avec le pouvoir calorifique du carburant brûlé ou imbrûlé.

3. Procédé selon la revendication 2, dans lequel l'étape consistant à fournir (étape 404') le niveau prédéterminé de seuil de combustion spécifique au cycle de combustion consiste en outre à :
lire (étape 404") le niveau prédéterminé de seuil de combustion spécifique au cycle de combustion à partir d'une banque de données spécifique au moteur stockée sur une unité de commande du moteur à combustion interne (100, 200, 300), dans lequel
le niveau prédéterminé de seuil de combustion spécifique au cycle de combustion est notamment fourni sous la forme d'une carte comprenant des valeurs de seuil données en fonction d'une charge ou d'un régime du moteur à combustion interne (100, 200, 300).

4. Procédé selon l'une quelconque des revendications précédentes, dans lequel le niveau de seuil de combustion prédéterminé spécifique au cycle de combustion permet de distinguer une combustion complète d'une combustion incomplète dans un cylindre (9) du moteur à combustion interne (100, 200, 300), et/ou
est l'un des éléments suivants : débit thermique, pression de combustion maximale dans le cylindre (9) ou pression effective moyenne indiquée à laquelle les ratés d'allumage sont détectés, et/ou
est d'environ 5 % à 25 % du débit thermique, de la pression de combustion maximale dans le cylindre (9) ou de la pression effective moyenne indiquée pendant le fonctionnement du moteur à combustion interne (100) avec une combustion complète dans le cylindre (9).

5. Procédé selon l'une quelconque des revendications précédentes, dans lequel la combustion incomplète indique qu'une quantité accrue de carburant gazeux imbrûlé est présente dans les gaz d'échappement associés à la combustion, et le procédé consiste en outre à
mettre fin (étape 412) au fonctionnement du moteur à combustion interne (100, 200, 300) fonctionnant avec le carburant gazeux ;
indiquer (étape 414) une défaillance du moteur à combustion interne (100, 200, 300) ; et/ou
basculer (étape 416) le fonctionnement vers un fonctionnement avec un carburant liquide.

6. Procédé selon l'une quelconque des revendications 1 à 4, dans lequel, lorsque, pour des événements de combustion multiples, une partie prédéfinie des événements de combustion est associée à des combustions incomplètes, le procédé consiste en outre à
mettre fin (étape 412) au fonctionnement du moteur à combustion interne (100, 200, 300) fonctionnant avec le carburant gazeux ;
indiquer (étape 414) une défaillance du moteur à combustion interne (100, 200, 300) ; et/ou
basculer (étape 416) le fonctionnement vers un fonctionnement avec un carburant liquide.

7. Procédé selon l'une quelconque des revendications précédentes, dans lequel le moteur à combustion interne (100, 200, 300) comprend un système d'allumage à carburant gazeux, et le procédé consiste en outre à
obtenir (étape 602) à partir d'une section (501) des données de pression (506, 508, 510) associées à un allumage un pouvoir calorifique d'allumage indicatif de l'aptitude au fonctionnement du système d'allumage de carburant gazeux.

8. Procédé selon la revendication 7, consistant en outre à :
déterminer (étape 604A) que le pouvoir calorifique d'allumage indique l'aptitude au fonctionnement du système d'allumage du carburant gazeux ; et
augmenter (étape 608) le rapport carburant/air et, par exemple, pour un moteur à combustion interne (100, 200, 300) comportant plusieurs cylindres (9), augmenter le rapport carburant/air pour le cylindre respectif (9), et/ou
déterminer (étape 604B) que le pouvoir calorifique d'allumage indique l'inaptitude au fonctionnement du système d'allumage du carburant gazeux ; et au moins l'un des éléments suivants
mettre fin (étape 412) au fonctionnement du moteur à combustion interne (100, 200, 300) avec le carburant gazeux ;
indiquer (étape 414) une défaillance du moteur à combustion interne (100, 200, 300) ; et
basculer (étape 416) le fonctionnement vers un fonctionnement avec un carburant liquide.

9. Procédé selon la revendication 8, dans lequel l'étape consistant à déterminer (étape 604) que le pouvoir calorifique d'allumage indique l'aptitude ou l'inaptitude au fonctionnement consiste à :
déterminer que le pouvoir calorifique d'allumage est supérieur à un seuil d'allumage prédéterminé.

10. Procédé selon l'une quelconque des revendications précédentes, dans lequel le pouvoir calorifique de combustion est un débit thermique de la combustion, le débit thermique de la combustion étant obtenu, par exemple, en multipliant les données de pression reçues par le volume du cylindre correspondant, et/ou
dans lequel le pouvoir calorifique de combustion est une pression réelle moyenne indiquée (IMEP) du cylindre (9), la pression réelle moyenne indiquée étant obtenue, par exemple, en intégrant les données de pression reçues sur la période d'un cycle de combustion, et/ou
dans lequel le pouvoir calorifique de combustion est obtenu à partir d'une différence de pression entre les données de pression associées à la combustion (506, 508, 510) et les données de pression associées au fonctionnement moteur du moteur (502), ces dernières étant obtenues, par exemple, à partir de la compression de l'air de suralimentation ou du mélange air-carburant non enflammé.

11. Moteur à combustion interne (100, 200, 300) fonctionnant au moins en partie avec un carburant gazeux, comprenant :
un système d'allumage de carburant gazeux destiné à enflammer le mélange de carburant gazeux et d'air,
un capteur (77) configuré pour détecter une donnée de pression correspondant à une évolution temporelle de la pression d'un cylindre pendant la combustion, et
une unité de commande (76) configurée pour exécuter le procédé selon l'une quelconque des revendications précédentes, dans lequel le capteur (77) atteint au moins partiellement la chambre de combustion (10) du cylindre (9) du moteur à combustion interne (100, 200, 300).
